Europäisches Patentamt

European Patent Office

Office européen des brevets

(11) Veröffentlichungsnummer: **0 085 128**
**B1**

(12) **EUROPÄISCHE PATENTSCHRIFT**

(45) Veröffentlichungstag der Patentschrift:
04.09.85

(51) Int. Cl.⁴: **B 64 C 27/32,** B 64 C 27/72, B 64 C 27/48

(21) Anmeldenummer: 82100704.4

(22) Anmeldetag: 02.02.82

(54) Rotor, insbesondere eines Drehflügelflugzeuges.

(43) Veröffentlichungstag der Anmeldung:
10.08.83 Patentblatt 83/32

(45) Bekanntmachung des Hinweises auf die Patenterteilung:
04.09.85 Patentblatt 85/36

(84) Benannte Vertragsstaaten:
DE FR GB IT

(56) Entgegenhaltungen:
EP - A - 0 048 799
FR - A - 2 397 326
FR - A - 2 416 840
FR - A - 2 465 643
GB - A - 2 001 025
US - A - 3 667 863

(73) Patentinhaber: Messerschmitt-Bölkow-Blohm
Gesellschaft mit beschränkter Haftung,
Robert-Koch-Strasse, D-8012 Ottobrunn (DE)

(72) Erfinder: Hahn, Michael, Dipl.-Ing., Bahnhofstrasse 15b,
D-8012 Ottobrunn (DE)
Erfinder: Wackerle, Peter-Martin, Dipl.-Ing., Oderweg 7,
D-8012 Ottobrunn (DE)
Erfinder: Sperber, Franz, Dipl.-Ing.,
Schwarzenbergstrasse 29, D-8208 Kolbermoor (DE)

ACTORUM AG

## Beschreibung

Die Erfindung betrifft einen Rotor, insbesondere eines Drehflügelflugzeugs, mit radial auswärts gerichteten Rotornabenarmen für die Halterung jeweils eines Rotorblattes an der Rotornabe über zwei den zugehörigen Rotornabenarm und die Blattwurzel senkrecht zur Rotordrehebene durchquerende Bolzen, wobei die Blattwurzel mit dem Blattflügel über einen wenigstens für die Blatteinstellwinkelbewegungen torsionsweichen Blatthalsabschnitt in Verbindung steht und die Blatteinstellwinkelsteuerung mittels einer in der Rotornabe angeordneten Steuerstange über eine in den Rotornabenarm drehwinkelbewegbar eingeführte, zur Blattwinkelachse koaxiale Steuerwelle und einen hiermit drehfest verbundenen Blattsteuerhebel auf eine den Blatthalsabschnitt berührungsfrei umgebende, radial auswärts von diesem mit dem Rotorblatt fest verbundene torsionssteife Hülle erfolgt.

Ein derartiger Rotor gemäss der älteren europäischen Patentanmeldung EP-A Nr. 0048799 (veröffentlicht am 7.4.82) ermöglicht trotz der (unbeweglichen) Bolzenhalterung der einzelnen Blattwurzel am zugeordneten Rotornabenarm die Einstellwinkelverstellung des betreffenden Rotorblattes vom Inneren der Rotornabe aus und somit deren Verwendung als Schutzgehäuse für Blattsteuermittel. Allerdings macht der der Steuerwelle zugeordnete Blattsteuerhebel, in achsparalleler Anordnung zu den beiden Befestigungsbolzen der Blattwurzel, entsprechend querlaufende Durchbrüche im zugeordneten Rotornabenarm bei einem gabelförmigen Rotornabenarm erforderlich , sofern für das Rotorblatt ohne besonderen Demontageaufwand eine (Schwenk-)Bewegungsmöglichkeit um einen der Befestigungsbolzen in eine sogenannte faltlage sicherzustellen ist. Solche Durchbrüche sind naturgemäss mit Festigkeitsproblemen für den betreffenden Rotornabenarm behaftet.

Der Erfindung liegt daher die Aufgabe zugrunde, bei einem Rotor der eingangs genannten Art grundsätzlich ohne Querdurchbrüche für Blattsteuermittel im einzelnen Rotornabenarm auszukommen.

Diese Aufgabe ist bei einem Rotor der eingangs genannter Art dadurch gelöst, dass die Steuerwelle über einen durch die Form der Blattwurzel zwischen den beiden Bolzen belassenen Freiraum aus dem Rotornabenarm herausragt in Eingriff mit dem an diesem auswärtigen Wellenende sitzenden Blattsteuerhebel als einen Kupplungsglied zwischen der Steuerwelle und der Hülle, also im Grunde durch eine Anpassung der Blattwurzel im Wege einer Aufspaltung soweit auswärts von dem zugeordneten Rotornabenarm, dass eine bis zur torsionssteifen Hülle reichende Steuerwelle verwendbar ist. Damit erübrigen sich dem vorbeschriebenen Rotor (EP-A Nr. 0048799) gegenüber nicht nur Durchbrüche im einzelnen Rotornabenarm für einen Blattsteuerhebel, sondern auch, durch den dann näher an die Hülle rückenden Blattsteuerhebel, gesonderte raumüberbrückende Bindeglieder zur Hülle.

Die Aufspaltung der Blattwurzel nach Massgabe der erforderlichen Freiraumes für die Steuerwelle und den zugehörigen Blattsteuerhebel lässt sich problemlos durch eine Gabelform erreichen, insbesondere im bevorzugten Anwendungsfall eines Rotorblattes aus Faserverbundwerkstoff mit in Blattlängsrichtung verlaufenden Fasersträngen, deren Gesamtheit im Blattwurzelbereich in zwei jeweils zu einer Schlaufe geformte Gurte aufgeteilt ist.

Weitere der in den Unteransprüchen gekennzeichneten Ausgestaltungen werden nachfolgend anhand eines Ausführungsbeispiels der Erfindung erläutert. Hierzu zeigt die Zeichnung von einem Rotor eines Drehflügelflugzeugs in

Fig. 1 einen Längsschnitt durch die Rotornabe im Bereich eines Blattanschlusses,

Fig. 2 eine draufsicht auf den in Fig. 1 dargestellten teilbereich des Rotorblattes.

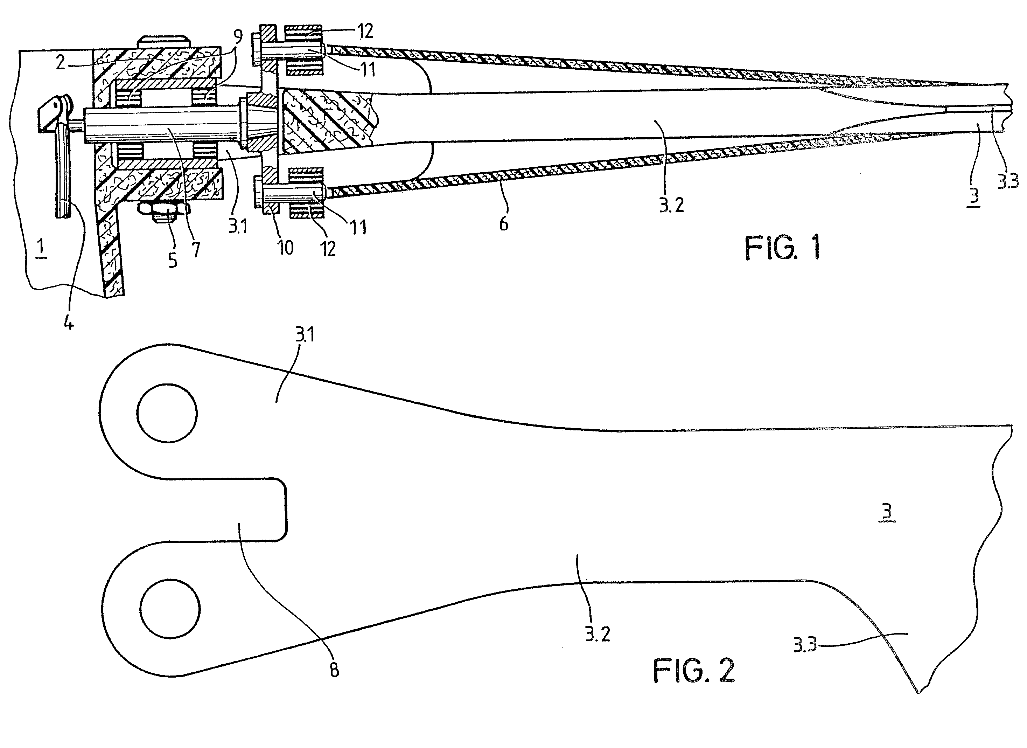

Die in Fig. 1 dargestellte Rotornabe 1, beispielsweise aus faserverstärktem Kunststoff, mit radial auswärts gerichteten, gabelförmigen Rotornabenarmen 2 zur Halterung je eines Rotorblattes 3 ist in Form eines (mit der nicht dargestellten Rotorantriebswelle umlaufenden) Gehäuses ausgebildet, in welchem Steuerglieder für die Blatteinstellwinkelverstellung untergebracht sind.

Hiervon ist bloss die Steuerstange 4 eines Steuergestänges ersichtlich, welches mit demjenigen gemäss der DE-OS Nr. 2658828 übereinstimmen kann.

Das nur teilweise dargestellte Rotorblatt 3, beispielsweise ebenfalls aus faserverstärktem Kunststoff, ist über seine Blattwurzel 3.1 am Rotornabenarm 2 mittels zweier senkrecht zur Rotordrehebene mit Abstand nebeneinander angeordneter Bolzen 5 befestigt (wovon demgemäss in Fig. 1 nur ein Bolzen ersichtlich ist). Um bei diesem sogenannten starren Anschluss der Blattwurzel 3.1 am Rotornabenarm 2 dennoch sicherzustellen, dass das Rotorblatt 3 bzw. sein Blattflügel 3.3 Blatteinstellwinkelbewegungen ausführen kann, ist der Blatthalsabschnitt 3.2 torsionsweich, beispielsweise aufgrund einer relativ langgestreckten Ausbildung aus Fasersträngen mit unidirektionaler Faserorientierung in Blattlängsrichtung. Wegen der grossen Baulänge des Blatthalsabschnittes 3.2 ist für die Blatteinstellwinkelverstellung einerseits eine torsionssteife (Steuer-)Hülle 6 erforderlich, welche, in torsionssteifer Verbindung mit dem Blattflügel 3.3, sich längs des Blatthalsabschnittes 3.2 berührungsfrei bis zur Blattwurzel 3.1 erstreckt. Andererseits ist aus der Rotornabe 1 in den Rotornabenarm 2 eine mittels der Steuerstange 4 drehwinkelbewegbare, zur Blattwinkelachse koaxiale Steuerwelle 7 eingeführt. Um diese Steuerwelle 7 zum Kuppeln mit der Hülle 6 aus dem Rotornabenarm 2 herausragen lassen zu können, ist gemäss Fig. 2 für die Blattwurzel 3.1 eine einen entsprechenden Freiraum 8 belassende Gabelform gewählt. Dieser Freiraum 8 ist ausreichend nicht nur für im Rotornabenarm 2 zwischen den Befestigungsbolzen 5 sitzende Radiallager 9 der Steuerwelle 7, sondern auch für einen an deren auswärtigem Wellende drehfest angeschlossenen zweiarmigen (gleicharmigen) Blattsteuerhebel 10 als Kupplungsglied zur Hülle 6. Die Verbindung dieses Blattsteuerhebels 10 mit der Hülle 6 ist schliesslich je Hebelarm durch einen hierin, in achsparalleler Anordnung zur Steuerwelle 7, fest-

## Patentansprüche

1. Rotor, insbesondere eines Drehflügelflugzeugs, mit radial auswärts gerichteten Rotornabenarmen (2) für die Halterung jeweils eines Rotorblattes (3) an der Rotornabe (1) über zwei den zugehörigen Rotornabenarm und die Blattwurzel senkrecht zur Rotordrehebene durchquerende Bolzen (5), wobei die Blattwurzel mit dem Blattflügel über einen wenigstens für die Blatteinstellwinkelbewegungen torsionsweichen Blatthalsabschnitt (3.2) in Verbindung steht, die Blatteinstellwinkelsteuerung mittels einer in der Rotornabe angeordneten Steuerstange (4) über eine in den Rotornabenarm drehwinkelbewegbar eingeführte, zur Blattwinkelachse koaxiale Steuerwelle (7) und einen hiermit drehfest verbundenen Blattsteuerhebel (10) auf eine den Blatthalsabschnitt berührungsfrei umgebende, radial auswärts von diesem mit dem Rotorblatt fest verbundene, torsionssteife Hülle (6) erfolgt, und wobei die Steuerwelle (7) über einen durch die Form der Blattwurzel (3.1) zwischen den beiden Bolzen (5) belassenen Freiraum (8) aus dem Rotornabenarm (2) herausragt in Eingriff mit dem an diesem auswärtigen Wellenende sitzenden Blattsteuerhebel (10) als einem Kupplungsglied zwischen der Steuerwelle (7) und Hülle (6).

2. Rotor nach Anspruch 1, wobei die Blattwurzel (3.1) die Form einer Gabel aufweist.

3. Rotor nach Anspruch 1, wobei die Hülle (6) mit dem Blattsteuerhebel (10) begrenzt längsbeweglich und in Blattschwenk- sowie Blattschlagrichtung begrenzt winkelbeweglich verbunden ist.

4. Rotor nach Anspruch 3 mit einer Bolzenverbindung, bei der ein in achsparalleler Anordnung zur Steuerwelle (7) am einzelnen Blattsteuerhebelarm festsitzender Bolzen (11) in ein an der Hülle (6) befestigtes Radialelastomerlager (12) eingeführt ist.

5. Rotor nach Anspruch 1 mit einer Radialelastomerlagerung (9) der Steuerwelle (7) gegenüber dem Rotornabenarm (2).

## Claims

1. A rotor, more especially of a helicopter, having radially outwardly directed rotor hub arms (2) each for holding a respective rotor blade (3) on the rotor hub (1) by way of two bolts (5) which traverse the respective rotor hub arm and the blade root perpendicularly to the plane of rotation of the rotor, in which respect the blade root communicates with the blade wing by way of a blade neck portion (3.2) which is torsionally supple at least for the angle-of-incidence movements of the blade, the control of the angle of incidence of the blade is effected by means of a control rod (4), arranged in the rotor hub, by way of a control shaft (7), which is introduced into the rotor hub arm so as to be movable through a rotary angle and which is coaxial with the blade angle axis, and a blade control lever (10), which is connected thereto in a torsionally-fast manner, onto a torsionally-stiff sheath (6) which surrounds the sitzenden Bolzen 11 hergestellt, der an der Hülle 6 in ein Radialelastomerlager 12 eingeführt ist. Hierdurch ist eine Bewegungsmöglichkeit der Hülle 6 gegenüber dem Blattsteuerhebel 10 sowohl in Blattlängsrichtung als auch in Blattschwenk- und Blattschlagrichtung soweit sichergesellt, dass Rückwirkungen auf die Steuerwelle 7 aus der Blattschwenk- und Blattschlagbiegung sowie Blattlängsdehnung weitgehend ausgeschlossen sind. Um eine unter diesem Kriterium zweckmässige Längsbeweglichkeit der Steuerwelle 7 zu erreichen, sind schliesslich auch deren Radiallager 9 als Elastomerlager ausgebildet.

blade neck portion in a contact-free manner and which is securely connected radially outwardly therefrom to the rotor blade, and in which respect the control shaft (7) projects by way of a free space (8), left through the shape of the blade root (3.1), between the two bolts (5), out from the rotor hub arm (2) into engagement with the blade control lever (10), seated on this outward shaft end, as a coupling member between the control shaft (7) and sheath (6).

2. A rotor according to Claim 1, in which the blade root (3.1) has the form of a fork.

3. A rotor according to Claim 1, in which the sheath (6) is connected to the blade control lever (10) so as to be limitedly longitudinally movable and so as to be limitedly angularly movable in the blade swivel direction as well as the blade flap direction.

4. A rotor according to Claim 3 with a bolt connection, in which a bolt (11) firmly seated in an axially-parallel arrangement to the control shaft (7) on the individual blade control lever arm is introduced into a radial elastomeric bearing (12) which is fastened to the sheath (6).

5. A rotor according to Claim 1 with a radial elastomeric mounting (9) of the control shaft (7) relative to the rotor hub arm (2).

## Revendications

1. Rotor, en particulier d'un appareil à voilure tournante, avec bras (2) du moyeu du rotor dirigés radialement vers l'extérieur pour la fixation de chaque pale (3) sur le moyeu (1) par l'intermédiaire de deux boulons (5) traversant le bras correspondant et le pied de pale perpendiculairement au plan de rotation du rotor, le pied de pale étant raccordé au corps de la pale par une section en forme de col (3.2) sensible à la torsion au moins pour les déplacements angulaires de réglage du pas, la commande du pas s'effectuant au moyen d'une biellette (4) disposée dans le moyeu du rotor et par l'intermédiaire d'un arbre de commande (7) coaxial à l'axe de variation du pas des pales et monté déplaçable angulairement en rotation dans le bras du moyeu ainsi que d'un levier de commande (10) raccordé fixé en rotation à cet arbre de commande et agissant sur un manchon (6) rigide à la torsion entourant sans la toucher la section du col de la pale et solidement raccordé à la pale du rotor radialement à l'extérieur de cette section de col et dans lequel l'arbre de commande (7) par l'intermédiaire d'un espace (8) laissé libre par la configuration du pied de pale (3.1) entre les deux boulons (5) fait saillie en dehors du bras (2) du rotor et vient en prise avec le levier de commande (10) de la pale placé à cette extrémité extérieure de l'arbre en tant qu'organe d'accouplement entre l'arbre de commande (7) et le manchon (6).

2. Rotor selon la revendication 1, dans lequel le pied de pale (3.1) a la forme d'une fourche.

3. Rotor selon la revendication 1, dans lequel le manchon (6) est raccordé au levier de commande (10) de la pale avec possibilité de déplacement longitudinal limité et de déplacement angulaire limité dans le sens de la traînée et du battement de la pale.

4. Rotor selon la revendication 3 avec un raccordement à boulons, dans lequel un boulon (11) placé sur chaque bras du levier de commande de la pale parallèlement à l'axe de l'arbre de commande (7) est engagé dans un palier radial (12) en élastomère fixé au manchon (6).

5. Rotor selon la revendication 1 avec un montage radial en élastomère (9) de l'arbre de commande (7) vis-à-vis du bras (2) du moyeu du rotor.